**Europäisches Patentamt**

**European Patent Office**

**Office européen des brevets**

(19)

(11) Veröffentlichungsnummer: **0 190 705**
**B1**

(12) # EUROPÄISCHE PATENTSCHRIFT

(45) Veröffentlichungstag der Patentschrift:
**28.12.88**

(51) Int. Cl.⁴: **F 16 D 66/02, F 16 D 65/02**

(21) Anmeldenummer: **86101372.0**

(22) Anmeldetag: **03.02.86**

(54) Verschleissanzeigevorrichtung für Bremsbeläge.

(30) Priorität: **04.02.85 DE 8502975 U**

(43) Veröffentlichungstag der Anmeldung:
**13.08.86 Patentblatt 86/33**

(45) Bekanntmachung des Hinweises auf die Patenterteilung:
**28.12.88 Patentblatt 88/52**

(84) Benannte Vertragsstaaten:
**DE FR GB IT**

(56) Entgegenhaltungen:
**EP-A- 0 116 000**
**DE-A- 2 048 964**
**DE-A- 2 854 357**
**DE-C- 2 827 035**
**GB-A- 1 250 127**
**GB-A- 1 284 207**
**US-A- 3 649 959**
**US-A- 4 422 534**

(73) Patentinhaber: **LUCAS INDUSTRIES public limited company, Great King Street, Birmingham, B19 2XF West Midlands (GB)**

(72) Erfinder: **Topic, Alojzija, Steinstrasse 31,
D-5400 Koblenz (DE)**
Erfinder: **Röhling, Bernd-Holger, Kirchberg 38,
D-5470 Andernach (DE)**

(74) Vertreter: **Wuesthoff, Franz, Dr.-Ing. et al, Patentanwälte Wuesthoff -v. Pechmann-Behrens-Goetz Schwelgerstrasse 2, D-8000 München 90 (DE)**

ACTORUM AG

# Beschreibung

Die Erfindung betrifft eine Verschleissanzeigevorrichtung für Bremsbeläge einer Teilbelag-Scheibenbremse mit einer Belagniederhaltefeder, in der zumindest ein Anpresssteg ausgebildet ist, der auf Belag-Trägerplatten drückt, um diese mitsamt den Bremsbacken ratterfrei anzupressen und mit einem Verschleissanzeige-Fühler, welcher derart an der Belag-Trägerplatte befestigt ist, dass bei einem vorgegebenen Verschleiss der Bremsbeläge ein Verschleissanzeigesignal ausgelöst wird.

Eine derartige Verschleissanzeigevorrichtung ist aus der DE-C-28 27 035 bekannt. Dort werden die Stromzuführungsleitungen für den Fühler dadurch positioniert, dass ein Befestigungsteil des Fühlers in eine federnde Haltevorrichtung eingeklemmt ist.

Aus der DE-A-20 48 964 ist eine Belagver-schleiss-Warneinrichtung bekannt, bei der ein Keramikkörper so geformt und positioniert ist, dass die Bremsbelagträger bei Abnutzung der Bremsbeläge den Keramikkörper brechen. Auf dem Keramikkörper ist ein elektrischer Widerstandsbelag aufgetragen, so dass sich beim Brechen des Keramikkörpers der Widerstand eines zugehörigen Stromkreises ändert, was zur Anzeige ausgenutzt wird.

Werden bei einer Scheibenbremse sowohl der in bezug auf das Fahrzeug innere als auch der äussere Bremsbelag mit je einer Verschleissanzeigevorrichtung versehen, so muss das Zuführkabel der Verschleissanzeigevorrichtung des in bezug auf das Fahrzeug äusseren Bremsbelages über die Bremsscheibe geführt werden.

Diese Wegführung des Zuführkabels zum äus-seren Bremsbelag bereitet insofern Schwierig-keiten, als zwischen dem Aussendurchmesser der Bremsscheibe und dem Innendurchmesser der Radfelge kein sehr grosser Freiraum vorhanden ist, so dass ein freiliegendes Kabel an der Bremsscheibe oder der Felge reiben und beschädigt werden könnte.

Insbesondere bei einem Einsatz im Gelände besteht die Gefahr, dass sich auf der Innenwand der Radfelge Schlamm oder Schmutz sammeln, welche ebenfalls eine Beschädigung des Kabels bewirken können.

Der Erfindung liegt die Aufgabe zugrunde, eine Verschleissanzeigevorrichtung zu schaffen, bei der das Zuführkabel zum in bezug auf das Fahrzeug äusseren Bremsbelag ungefährdet ist. Insbesondere soll die Anbringung des Zuführkabels keine besonderen neuen Bauteile erfordern und auch bei Altfahrzeugen eine einfache Nachrüstung ermöglichen.

Erfindungsgemäss wird diese Aufgabe dadurch gelöst, dass das Zuführkabel zum Verschleissanzeigefühler in einer Mulde geführt ist, die in zumindest einem der Anpressstege der Belagniederhaltefeder ausgeformt ist.

Die Belagniederhaltefeder ist zur ratterfreien Lagerung der Bremsbeläge ohnehin über den beiden Belag-Trägerplatten angeordnet und überspannt die Bremsscheibe. Die an den Belag-Trägerplatten anliegenden Anpressstege der Belag-niederhaltefeder sind erfindungsgemäss muldenförmig ausgestaltet, so dass in ihnen das Zuführ-kabel zum Verschleissanzeigefühler geschützt ge-führt werden kann.

Damit das Zuführkabel nicht aus der Mulde im Anpresssteg der Belagniederhaltefeder herausrutschen kann, ist es dort befestigt. Zur Befestigung in der bevorzugt mit halbkreisförmigem Querschnitt ausgeformten Mulden dient in einer Weiterentwicklung der Erfindung ein Blechteil, mit welchem die Mulde abgedeckt wird. Das Blechteil wird so ausgestaltet, dass es mit einer Kante den die Mulde formenden Anpresssteg umfasst, während die andere Kante mittels eines elasti-schen Schnappverschlusses am Anpresssteg be-festigt ist. Das die Mulde abdeckende Blechteil hält das Zuführkabel zum Verschleissanzeigefühler in der Mulde fest und schützt es gegen Beschädigung.

Die Erfindung ist nachfolgend anhand der Zeichnung näher beschrieben. Dabei zeigt:

Fig. 1 eine Scheibenbremse mit welcher die erfindungsgemässe Verschleissanzeigevorrichtung eingesetzt wird;

Fig. 2 eine Draufsicht auf eine erfindungsgemässe Verschleissanzeigevorrichtung und

Fig. 3 einen Schnitt entlang der Linie A–A der Fig. 2.

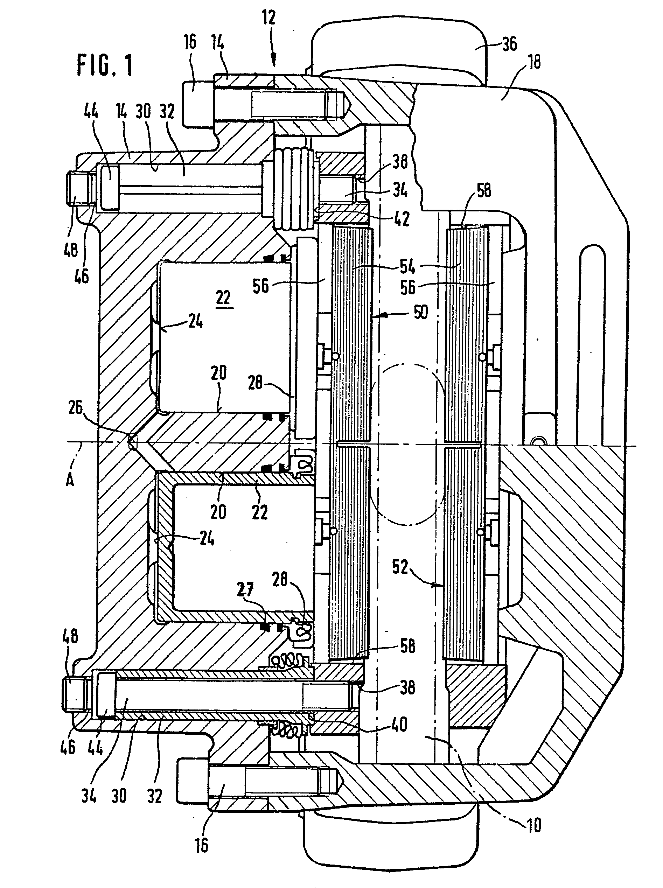

In Fig. 1 ist eine Scheibenbremse für Kraftfahrzeuge teilweise geschnitten dargestellt. Die Schnittebene enthält eine Sekante der zugehörigen, mit strichpunktierten Linien angedeuteten Bremsscheibe 10 und erstreckt sich parallel zu deren Achse A.

Zur Scheibenbremse gehört ein Schwimmsattel 12, der aus einem Zylindergehäuse 14 und einem daran mit Schrauben 16 befestigten Rahmenteil 18 zusammengesetzt ist. Das Zylindergehäuse 14 bildet das in bezug auf das zugehörige Fahrzeug innere Teil des Sattels 12. Das Rahmenteil 18 greift, ausgehend vom Zylindergehäuse 14, über die Bremsscheibe 10 hinweg und erstreckt sich sehnenartig auf deren vom Zylindergehäuse 14 abgewandter Seite.

Das Zylindergehäuse 14 weist eine Betätigungsvorrichtung 20, 22 mit zwei zur Achse A parallelen Zylinderbohrungen 20 auf, in denen je ein Kolben 22 geführt und in der dargestellten Einbaulage an einem Vorsprung 24 in der Mitte der zugehörigen Zylinderbohrung 20 abgestützt ist. In die beiden Zylinderbohrungen 20 mündet hinter den Kolben 22 ein sich verzweigender Druckmittelkanal 26. Die beiden Kolben 22 ragen in Richtung zur Bremsscheibe 10 aus ihren Zylinderbohrungen 2 heraus und sind gegen das Zylindergehäuse 14 durch je eine Manschette 28 abgedichtet.

Das Zylindergehäuse 14 weist ferner zwei Führungsbohrungen 30 auf, die sich ebenfalls parallel zur Achse A erstrecken und in derselben Ebene liegen wie die Zylinderbohrungen 20, die zwischen den beiden Führungsbohrungen 30 angeordnet sind. In jeder der Führungsbohrungen 30 ist ein Führungsbolzen 32 geführt, der hohl ausgebildet und mit einer sich durch ihn hindurcherstreckenden Schraube 34 an einem Bremsträger 36 befestigt ist. Der Bremsträger 36 hat für jede der beiden Schrauben 34 eine Gewindebohrung 38. Jede der Gewindebohrungen 38 beginnt an einer Ansenkung 40 bzw. 42 des Bremsträgers 36.

Die in der Fig. 1 untere Absenkung 40 hat einen Durchmesser, der eng an den Aussendurchmesser des Endes des zugehörigen Führungsbolzens 32 angepasst ist, so dass dieser formschlüssig in seiner Lage gehalten ist. Die in der Zeichnung obere Absenkung 42 für den anderen Führungsbolzen 32 hat einen grösseren Durchmesser, so dass dieser andere Führungsbolzen sich an die Lage der zugehörigen Führungsbohrung 30 anpassen kann und erst durch Festziehen der zugehörigen Schraube 34 in bezug auf den Bremsträger 36 kraftschlüssig festgelegt wird.

Die Schrauben 34 haben je einen Kopf 44 mit Innensechskant und lassen sich mit einem Innensechskantschlüssel festziehen, der durch je eine Gewindebohrung 46 des Zylindergehäuses 14 eingeführt wird. Die Gewindebohrungen 46 werden anschliessend mit je einem Gewindestopfen 48 dicht verschlossen.

Die beiden Kolben 22 liegen mit je einer ringförmigen Stirnfläche unmittelbar an einer direkt betätigbaren Bremsbacke 50 an, die durch Ausfahren der Kolben 22 an die in bezug auf das Fahrzeug innere Seite der Bremsscheibe 10 anlegbar ist. Der anderen, in bezug auf das Fahrzeug äusseren Seite der Bremsscheibe 10 ist eine indirekt betätigbare Bremsbacke 52 zugeordnet, die an die Bremsscheibe 10 dadurch anlegbar ist, dass die vom hydraulischen Druck in den Zylinderbohrungen 20 auf das Zylindergehäuse 14 ausgeübten Reaktionskräfte den Sattel 12 in bezug auf das Fahrzeug axial nach innen, in der Zeichnung nach links, verschieben.

Jede der beiden Bremsbacken 50 und 52 hat einen Bremsbelag 54 und eine diesen abstützenden Belagträgerplatte 56, die zwischen achsparallelen Führungsflächen 58 des Bremsträgers 36 verschiebbar geführt ist. Die Bremskräfte, die beim Bremsen in Sekantenrichtung der Bremsscheibe 10 auf die Bremsbacken 50 und 52 einwirken, werden von deren Belag-Trägerplatten 56 über die Führungsflächen 58 unmittelbar auf den Bremsträger 36 abgeleitet, so dass sie den Sattel 12 und dementsprechend auch die Führungsbolzen 32 nicht belasten.

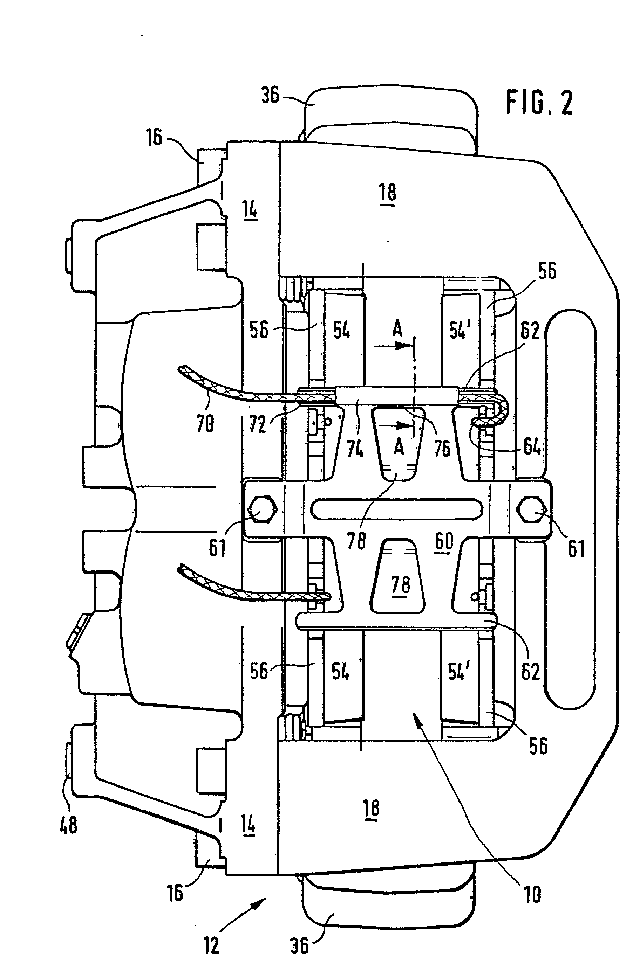

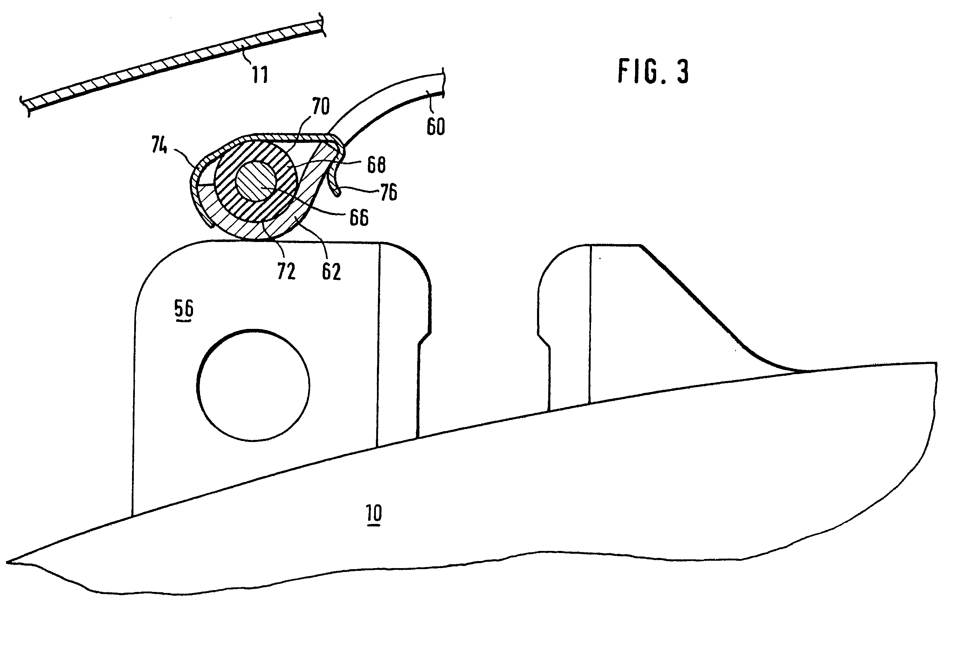

Fig. 2 zeigt die bei der Scheibenbremse gemäss Fig. 1 eingesetzte Verschleissanzeigevorrichtung. Eine Belagniederhaltefeder 60 aus Federblecharmen ist mittels Schrauben 61 am Sattel 12 befestigt. Die Belagniederhaltefeder 60 drückt auf die darunterliegenden Belag-Trägerplatten 56 und verhindert somit deren Rattern. Integral mit der Belagniederhaltefeder 60 sind Anpressstege 62 ausgebildet, die direkt auf den Belag-Trägerplatten 56 aufliegen (s.a. Fig. 3). Der Verschleissanzeigefühler 64 ragt durch die Belag-Trägerplatte 56 in den äusseren Bremsbelag 54'. Ist der äussere Bremsbelag 54' abgenutzt, so wird durch die Bremsscheibe 10 der Leiter 66 (s.a. Fig. 3) aus seiner isolierenden Hülle 68 freigelegt, so dass ein elektrischer Kontakt entsteht, welcher in bekannter Weise für die Verschleissanzeige herangezogen wird. Das Zuführkabel 70 ist in einer Mulde 72 des Anpresssteges 62 der Belagniederhaltefeder 60 geführt, wie in Fig. 3 im Detail zu erkennen ist.

Fig. 3 zeigt einen Abschnitt der Belagniederhaltefeder 60 mit dem Anpresssteg 62, in welchem eine Mulde 72 mit etwa halbkreisförmigem Querschnitt ausgebildet ist. In der Mulde 72 wird das Zuführkabel 70 zum Verschleissanzeigefühler 64 geführt. Der Schnitt durch das Zuführkabel 70 zeigt, dass dieses aus einem Leiter 66 und einer umgebenden, isolierenden Hülle 68 besteht. Ein Blechteil 74 deckt die Mulde 72 und das darin geführte Zuführkabel 70 nach oben ab. Das Blechteil 74 umfasst gemäss Fig. 3 eine Kante des Anpresssteges 62, während die gegenüberliegende Kante des Blechteiles 74 mit einem Schnappverschluss 76 versehen ist, welcher in eine Ausnehmung 78 in der Belagniederhaltefeder 60 eingreift. Das Blechteil 74 lässt sich somit von Hand formschlüssig auf den Anpresssteg 62 zur Arretierung des Zuführkabels 70 aufschieben. In Fig. 3 ist neben der Bremsscheibe 10 auch die Felge 11 dargestellt und es ist zu erkennen, dass das Zuführkabel 70 nicht durch an der Felge 11 eventuell hängenden Schmutz beschädigt werden kann.

Das Blechteil 74 ist aufgrund der symmetrischen Ausbildung sowohl für die rechte als auch die linke Bremse verwendbar.

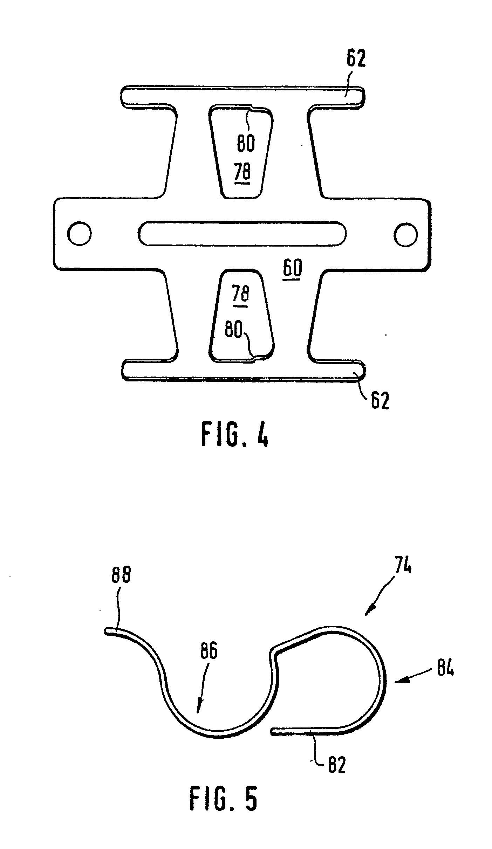

Fig. 4 zeigt eine Draufsicht auf ein weiteres Ausführungsbeispiel einer Belagniederhaltefeder 60, welche dem zuvor beschriebenen Ausführungsbeispiel bis auf den Absatz 80 in der Ausnehmung 78 entspricht.

Fig. 5 zeigt ein weiteres Ausführungsbeispiel eines als Kabelhalter dienenden Blechteils 74, welches gegenüber dem in Fig. 3 gezeigten seitenvertauscht dargestellt ist. Das Blechteil 74 weist gegenüber dem in Fig. 3 gezeigten Ausführungsbeispiel einen verlängerten Arm 82 auf, welcher unter den Anpresssteg 62 ragt und sich auf der Belagträgerplatte 56 abstützt. An der Stelle 84 verjüngt sich das Blechteil 74 in den Arm 82. Der Bogen 86 greift in die Ausnehmung 78 und der Ausläufer 88 des Bogens 86 stützt sich am gegenüberliegenden Ende der Ausnehmung 78 ab.

**Patentansprüche**

1. Verschleissanzeigevorrichtung für Bremsbeläge (54) einer Teilbelag-Scheibenbremse mit einer Belagniederhaltefeder (60), in der zumindest ein Anpresssteg (62) ausgebildet ist, der auf Belag-Trägerplatten (56) drückt, um diese mitsamt den Bremsbacken (50, 52) ratterfrei anzupressen und mit einem Verschleissanzeige-Fühler (64), welcher bei einem vorgegebenen Verschleiss der Bremsbeläge (54) ein Verschleissanzeigesignal auslöst, dadurch gekennzeichnet, dass das Zuführkabel (70) zum Verschleissanzeigefühler (64) in einer Mulde (72) geführt ist, die in dem Anpresssteg (62) der Belagniederhaltefeder (60) ausgeformt ist.

2. Verschleissanzeigevorrichtung nach Anspruch 1, dadurch gekennzeichnet, dass die Mulde (72) zumindest annähernd halbkreisförmigen Querschnitt hat.

3. Verschleissanzeigevorrichtung nach einem der Ansprüche 1 oder 2, dadurch gekennzeichnet, dass die Mulde (72) durch ein Blechteil (74) abdeckbar ist.

4. Verschleissanzeigevorrichtung nach Anspruch 3, dadurch gekennzeichnet, dass das Blechteil (74) mittels eines Schnapp-Verschlusses (76) am Anpresssteg (62) befestigbar ist.

5. Verschleissanzeigevorrichtung nach einem der vorhergehenden Ansprüche, dadurch gekennzeichnet, dass als Verschleissanzeige-Fühler (64) ein von einer isolierenden Hülle (68) umgebener elektrischer Leiter (66) vorgesehen ist, welcher derart an der Belag-Trägerplatte (56) befestigt ist, dass bei einem vorgegebenen Verschleiss der Bremsbeläge (54) die isolierende Hülle abgeschliffen wird.

6. Verschleissanzeigevorrichtung nach einem der vorhergehenden Ansprüche, dadurch gekennzeichnet, dass die Belag-Niederhaltefeder (60) mit zwei Anpressstegen (62) ausgebildet ist, welche jeweils mit einer Mulde (72) zur Aufnahme des Zuführkabels (70) zum Verschleissanzeigefühler (64) versehen sind.

7. Verschleissanzeigevorrichtung nach einem der vorhergehenden Ansprüche, dadurch gekennzeichnet, dass der Verschleissanzeige-Fühler (64) an der Belag-Trägerplatte (56) befestigt ist.

**Revendications**

1. Dispositif pour l'indication d'usure pour garnitures de frein (54) d'un frein à disque partiel, comportant un ressort presse-garniture (60) dans lequel au moins une nervure de serrage (62) est formée qui exerce une pression sur des plaques-supports de garnitures (56), afin de serrer ces dernières, ensemble avec les mâchoires (50, 52), sans produire du broutage, et un palpeur témoin d'usure (64) qui, au moment d'obtenir un montant prédéterminé d'usure des garnitures de frein (54), provoque la génération d'un signal indicateur d'usure, caractérisé en ce que le câble d'alimentation (70) du palpeur témoin d'usure (64) est posé dans un creux (72) pratiqué dans la nervure de serrage (62) du ressort presse-garniture (60).

2. Dispositif pour l'indication d'usure selon la revendication 1, caractérisé en ce que le creux (72) a une section droite sensiblement demi-circulaire.

3. Dispositif pour l'indication d'usure selon l'une quelconque des revendications 1 ou 2, caractérisé en ce que le creux (72) peut être recouvert d'un élément (74) en tôle.

4. Dispositif pour l'indication d'usure selon la revendication 3, caractérisé en ce que l'élément (74) en tôle peut être fixé sur la nervure de serrage (62) au moyen d'une fixation encliquetable (76).

5. Dispositif pour l'indication d'usure selon l'une quelconque des revendications précédentes, caractérisé en ce que comme palpeur témoin d'usure (64), l'on a prévu un conducteur électrique (66), enveloppé par une gaine isolante (68), ledit conducteur étant fixé sur la plaque-support de garnitures (56) de telle manière que, au moment d'obtenir un montant prédéterminé de l'usure des garnitures de frein (54), la gaine isolante s'usera en frottant.

6. Dispositif pour l'indication d'usure selon l'une quelconque des revendications précédentes, caractérisé en ce que le ressort presse-garniture (60) comporte deux nervures de serrage (62) qui sont, chacune, pourvues d'un creux (72) destiné à loger le câble d'alimentation (70) du palpeur témoin d'usure (64).

7. Dispositif pour l'indication d'usure selon l'une quelconque des revendications précédentes, caractérisé en ce que le palpeur témoin d'usure (64) est fixé sur la plaque-support de garnitures (56).

**Claims**

1. A wear indicating device for friction linings (54) of a spot-type disc brake, comprising a hold-down spring (60) for the friction lining, said spring being formed with at least one contact pressure web (62) which exerts pressure upon backplates (56) carrying the friction linings in order to urge said backplates together with the brake pads (50, 52) into engagement in a non-rattling manner, and a wear indicationg sensor (64) which causes a wear indicating signal to be generated upon reaching a predetermined amount of wear of the friction linings (54), characerized in that the lead cable (70) to the wear indicating sensor (64) is run along a trough (72) formed in the contact pressure web (62) of the hold-down spring (60) for the friction lining.

2. The wear indicating device according to claim 1, characterized in that the trough (72) has a generally semi-circular cross-section.

3. The wear indicating device according to any of claims 1 or 2, characterized in that the trough (72) is adapted to be covered by a sheet metal member (74).

4. The wear indicating device according to claim 3, characterized in that the sheet metal member (74) is adapted to be secured to the contact pressure web (62) by means of a snap catch (76).

5. The wear indicating device according to any of the preceding claims, characterized in that as the wear indicating sensor (64), an electric conductor (66), enclosed by an insulating sheath (68), is used, said conductor being secured to the backplate (56) carrying the friction lining in such a manner that the insulating sheath will be abraded when reaching a predetermined amount of wear of the friction linings (54).

6. The wear indicating device according to any of the preceding claims, characterized in that the hold-down spring (60) for the friction lining is formed with two contact pressure webs (62), provided each with a trough (72) to receive the lead cable (70) to the wear indicator sensor (64).

7. The wear indicating device according to any of the preceding claims, characterized in that the wear indicating sensor (64) is secured to the backplate (56) carrying the friction lining.

FIG. 1

FIG. 2

FIG. 3

FIG. 4

FIG. 5